# EUROPEAN PATENT APPLICATION

(11) **EP 2 942 833 A1**
(43) Date of publication of application: **11.11.2015**
(21) Application number: 13704873.2
(22) Date of filing: 07.01.2013
(51) Int. Cl.: H01M 10/48, H02J 7/00, H02J 7/02

(54) **DEVICE FOR CONTROLLING ELECTRICITY STORAGE SYSTEM**

(71) Applicant: Hitachi, Ltd., Chiyoda-ku Tokyo (JP)
(72) Inventor: KASAI, Naruhiko, Tokyo 104-0044 (JP); TANAKA, Katsuyoshi, Tokyo 104-0044 (JP); NAKAHATA, Naoyuki, Tokyo 104-0044 (JP)
(74) Representative: Calderbank, Thomas Roger
(86) International application number: PCT/JP2013/050017
(87) International publication number: WO 2014/106893

(57) **Abstract**

An energy storage system controller compatible with energy storage batteries and/or host systems for a plurality of types of specifications and usages is provided. An energy storage system controller which is a typical embodiment of the present invention is connected to energy storage battery modules including a plurality of energy storage battery cells and status monitor potions acquiring battery information that is information related to statuses of the energy storage battery cells, the energy storage system controller including a control portion receiving the battery information from the storage monitor portion and outputting control signals for performing control of the energy battery cells based on the battery information, in which the control portion includes a plurality of types of communication interfaces for transferring and receiving data to and from the status monitor portions, the control portion being capable of carrying out transmission and reception of the battery information and the control signals with a plurality of types of the status monitors or the energy storage battery cells corresponding to different ones of the communication interfaces.

## Description

### TECHNICAL FIELD

The present invention relates to technology of battery control and more particularly relates to technology effectively adopted to a controller of an energy storage system composed of a lithium ion battery, a lithium ion capacitor and so forth.

### BACKGROUND ART

It is essential for storage battery modules like lithium ion batteries to use a control circuit and a controller for performing a status monitoring of the battery and also performing adjustment, balancing, etc. of capacitance based on information of the status monitoring, and an energy storage system is configured including a control circuit and a controller. Here, a communication interface (IF) is required to perform control of the battery based on a result information of the status monitoring, to send battery information to a controller from a circuit for performing status monitoring like an integrated circuit (IC), and to send signals for a controller to perform control like capacitance adjustment etc. on a status monitor, the battery etc.

As technology relating to this, for example, Japanese Patent Application Laid-Open Publication No. 2000-74786 (Patent Document 1) describes an assembled battery controller for electric vehicles including: a cell controller using an assembled battery for electric vehicles composed of a plurality of cells, detecting and diagnosing statuses of the cells and temporally storing the statuses; a battery controller using a complementary battery mounted on an electric vehicle and controlling charge and discharge of the assembled battery; and an interface for mutual transmission and reception of data between the cell controller and the battery controller, the assembled battery controller for electric vehicles being capable of reducing variations in safety of data retention such as self-diagnosis result and in cell capacitance by providing a RAM to the battery controller and transmitting battery information including at least a result of the diagnosis from the cell controller to the battery controller immediately before turning off the battery controller to store the battery information in the RAM.

### Prior Art Documents

### Patent Document

Patent Document 1: Japanese Patent Application Laid-Open Publication No. 2000-74786

### DISCLOSURE OF THE INVENTION

### PROBLEMS TO BE SOLVED BY THE INVENTION

In recent years, energy storage battery systems have been introduced to various usages such as mounting on standby batteries for system power supplies such as UPS (Uninterruptible Power Supply) or electric vehicles, hybrid vehicles or the like, mounting on construction machines, etc., and specifications of energy storage modules include types, the number of cells and so forth of their battery modules and vary in accordance with usages. In addition, specifications of a host system that uses the battery also vary in accordance with usages.

Conventionally, controllers and status monitors have been provided with communication interfaces of its own, respectively, following communication specifications used in the status monitor in accordance with usages and specifications of energy storage systems. That is, they have been made compatible with each of specifications of a plurality of types of energy storage batteries by controllers having communication interfaces different to each other. Also, they have been made compatible with host systems in the same manner by controllers having communication interfaces different to each other with respect to each specification of the host systems. Therefore, for example, when adopting them to devices or the like having energy storage batteries and host systems with different specifications, it is necessary to newly develop their controllers in accordance with the specifications and thus there has been a problem of increasing development cost.

Accordingly, a preferred aim of the present invention is to provide an energy storage system controller compatible with energy storage batteries and/or host systems having a plurality of types of specifications and usages.

The above and other preferred aims and novel characteristics of the present invention will be apparent from the description of the present specification and the accompanying drawings.

### MEANS FOR SOLVING THE PROBLEMS

The typical ones of the inventions disclosed in the present application will be briefly described as follows.

An energy storage system controller according to a typical embodiment of the present invention includes a control portion connected to an energy storage battery module that includes a plurality of energy storage battery cells and a status monitor portion acquiring battery information that is information related to statuses of the energy storage battery cells, the control portion receiving the battery information from the status monitor portion and outputting control signals for performing control of the energy storage battery cells based on the battery information, the control portion having a plurality of types of first communication interfaces for transferring and receiving data to and from the status monitor portion and transferring and receiving the battery information and the control signals to and from a plurality of types of the status monitor portions or the energy storage cells compatible with different ones of the first communication interfaces.

### EFFECTS OF THE INVENTION

The effects obtained by typical aspects of the present invention will be briefly described below.

More specifically, according to the typical embodiment of the present invention, by making the energy storage system controller compatible with energy storage batteries and/or host systems having different types of specifications and usages, it is possible to be compatible with changes in specification and usages of the energy storage batteries and host systems by a shared controller and also possible to reduce its development period and cost.

### BRIEF DESCRIPTIONS OF THE DRAWINGS

FIG. 1 is a diagram illustrating a schema about a configuration example of an energy storage system controller which is an embodiment of the present invention;
FIGS. 2A and 2B are diagrams illustrating schemas about specific configuration examples of the energy storage system controller according to the embodiment of the present invention;
FIGS. 3A to 3C are diagrams illustrating schemas about configuration examples of information transferred and received between interfaces of a controller portion and a status monitor portion(s) according to the embodiment of the present invention; and
FIGS. 4A and 4B are diagrams illustrating schemas about configuration examples of an energy storage system controller according to existing technique.

### BEST MODE FOR CARRYING OUT THE INVENTION

Hereinafter, embodiments of the present invention will be described in detail with reference to the accompanying drawings. Note that components having the same function are denoted by the same reference symbols throughout the drawings for describing the embodiment, and the repetitive description thereof will be omitted. Moreover, in the following, to facilitate understanding of features of the present invention, descriptions will be made with a comparison with an existing technique.

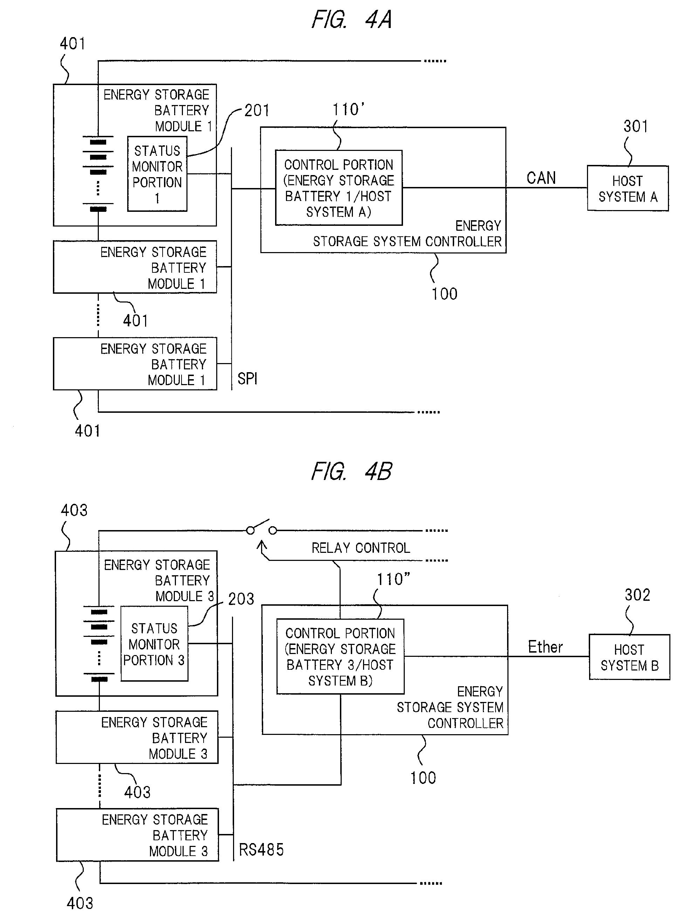

FIG. 4 is a diagram illustrating schemas about configuration examples of an energy storage system controller according to existing technique. In FIGS. 4A and 4B, a status monitor portion (status monitor portion 1 (201) in FIG. 4A; status monitor portion 3 (203) in FIG. 4B) including a circuit device performing status monitoring is provided with respect to a plurality of cells in energy storage battery modules (energy storage battery modules 1 (401) in FIG. 4A; energy storage battery modules 3 (403) in FIG. 4B) having different specifications, respectively.

While battery information that is information related to statuses of energy storage battery cells acquired by the status monitor portions is transmitted to an energy storage system controller 100, communication interfaces upon the transmission are different, respectively (SPI (Serial Peripheral Interface) in FIG. 4A and RS485 in FIG. 4B). Specifications of host systems to which the energy storage system controller 100 is connected are respectively different (host system A 301 in FIG. 4A and host system B 302 in FIG. 4B), and communication interfaces before the energy storage system controller 100 are respectively different (CAN (Controller Area Network) in FIG. 4A and Ethernet (Trademark) in FIG. 4B).

Therefore, in the energy storage controller 100, control portions are individually formed to be compatible with the communication interfaces (control portion 110' in FIG. 4A and 110" in FIG. 4B). Note that, in the example of the control portion 110" in FIG. 4B, an interface for outputting battery control signals for instructing relay control etc. directly to the energy storage battery modules 3 (403) is included. In this manner, in the past, unique control portions each formed of control circuits etc. have been individually developed in accordance with specifications etc. of energy storage batteries and host systems. In this case, there is a merit that control portions can be developed suitably to specifications etc. of energy storage batteries and host systems with a small number of parts; on the other hand, there is a demerit that, when the number of types of energy storage batteries and host systems are increased, load related to development, manufacturing, management is abruptly increased.

Accordingly, the energy storage system controller which is an embodiment of the present invention is compatible to changes in specifications and usages of energy storage batteries and host systems by a common controller by previously providing a plurality of types of communication interfaces which may be necessary in transferring and receiving information to and from energy storage batteries and/or host systems having a plurality of types and usages.

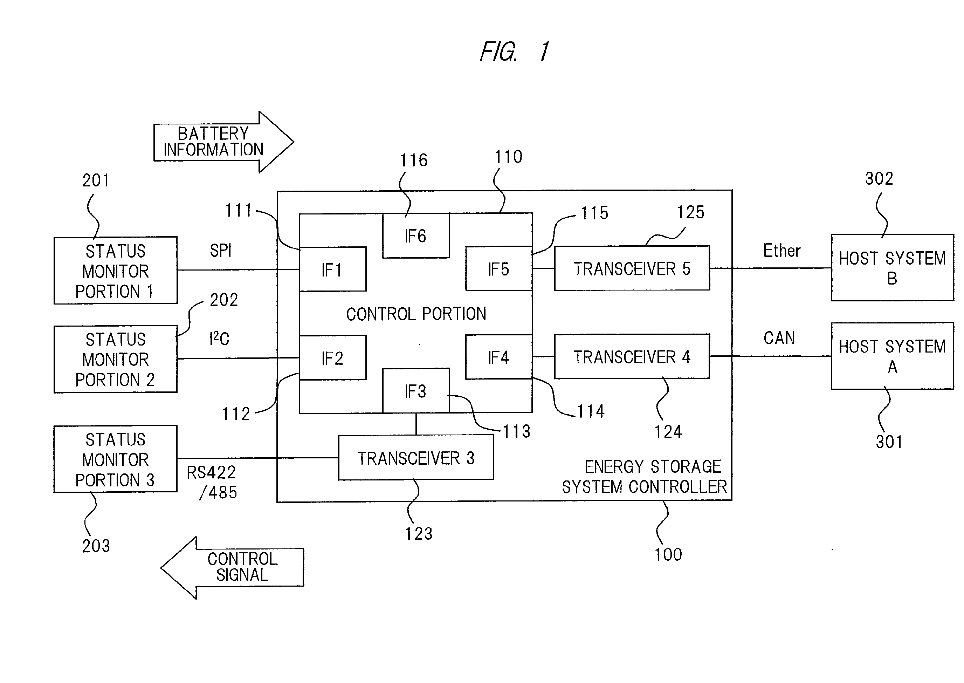

FIG. 1 is a diagram illustrating a schema about a configuration example of the energy storage system controller which is an embodiment of the present invention. The energy storage system controller 100 is composed of, for example, a circuit board, and is a device installed as a part of an energy storage system including a plurality of energy storage battery modules which are not illustrated; for example, the energy storage system controller 100 includes a control portion composed of a microcomputer, an integrated circuit, etc. For example, the energy storage system controller 100 has a configuration connectable with status monitor portions (in the figure, status monitor portion 1 (201) to status monitor portion 3 (203)) having a plurality of specifications composed of integrated circuits, microcomputers, etc. and host systems having one or more types of specifications (in the figure, host system A 301, host system B 302).

Each of the status monitor portions 1 (201) to 3 (203) is attached to one or more energy storage battery modules not illustrated and has a sensor and a computation function for measuring and calculating battery information such as voltage, temperature, current, and resistance value with respect to a plurality of cells in the energy storage module. The acquired battery information is transmitted to the energy storage system controller 100 using predetermined communication interfaces. The communication interfaces may be different ones depending on capacity and size of the energy storage battery modules. In addition, based on control signals from the energy storage system controller 100, control processing for capacity adjustment (balancing) by discharging cells having high capacity among those inside the energy storage battery module is also performed.

Each of the host systems A 301 and B 302 is a controller or the like of equipment, devices, systems (for example, vehicles like electric vehicles and hybrid vehicles, construction machines, etc.) using an energy storage battery system and performs transferring and receiving of information with the energy storage system controller 100 using predetermined communication interfaces. The communication interfaces may be different depending on functions, usages and so forth of host systems in some cases.

The control portion 110 of the energy storage system controller 100 performs monitoring of a state of each of the energy storage battery module based on the battery information transmitted from the status monitor portions such as the status monitor portions 1 (201) to 3 (203) and, when necessary, transmits control signals for control such as capacity adjustment by discharging specific cells etc. to the energy storage battery modules via the status monitor portions. In addition, when necessary, communications with the host systems A 301 and B 302 etc. are controlled and the battery information and control information are transmitted and received.

The control portion 110 has a plurality of communication interfaces of different types for communications with the status monitor portions 1 (201) to 3 (203) for different specifications and usages, the host systems A 301, B 302 and so forth (in the figure, interfaces (IF) 1 to 6). For example, as types of communication interfaces, SPI, ¹²C (Inter-Integrated Circuit), RS422 and RS485 are included for communications with the status monitor portions; and CAN and Ethernet (Trademark) are included for communications with the host systems.

Although the communication interfaces, particularly interfaces before the status monitor portions are basically interfaces for serial communication, interfaces (RS422/485 etc.) using differential signals as countermeasure against noise for use in a large-capacity energy storage battery systems are included. Note that, as well as the communication interfaces before the host systems, transceivers (in the figure, transceiver 3 (123) to transceiver 5 (125)) are suitably provided when the interfaces use differential signals.

Although the control portion 110 includes six types of communication interfaces in the example of FIG. 1, the number and types of the included communication interfaces are not limited basically. For example, two or more same communication interfaces of a specific type may be included and also other interfaces such as those for parallel communication in addition to the types of communication interfaces illustrated may be included. However, in the present embodiment, in consideration of realistic usages, at least one or more interfaces for serial communications are included before the status monitor portions, and further, one or more interfaces using differential signals are included.

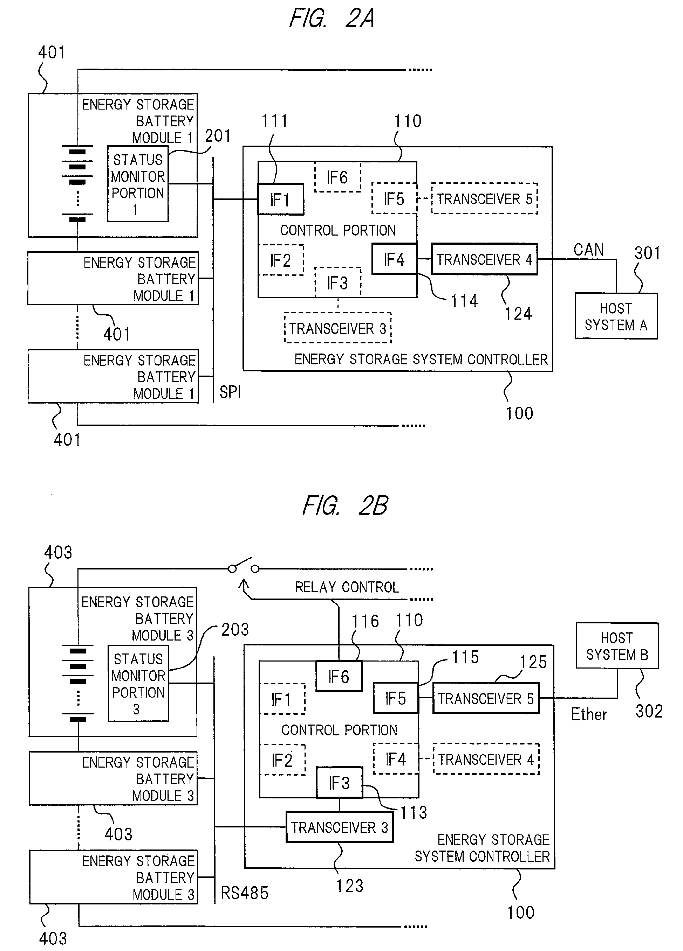

In addition, although a plurality of types of status monitor portions and host systems are connected to a plurality of communication interfaces at the same time in the configuration in the example of FIG. 1, in actual usages, as illustrated in FIG. 2, only necessary interfaces are used in accordance with specifications and usages of the status monitor portions and host systems.

FIG. 2 is a diagram illustrating schemas about specific configuration examples of the energy storage system controller 100. In FIGS. 2A and 2B, configuration examples of the energy storage system controller 100 in a situation in which the control portion 110 of the present embodiment is adopted in accordance with the configurations of the energy storage battery modules (energy storage battery module 1 (401) and energy storage battery module 3 (403)) and host systems (host system A 301 and host system B 302) in FIGS. 4A and 4B described above, respectively.

In the example of FIG. 2A, in the control portion 110, only the interface 1 (111) compatible with SPI that is a communication interface used by the status monitor portion 1 (201), the interface 4 (114) compatible with CAN that is a communication interface used by the host system A 301, and the transceiver 4 (123) are actually used and the other interfaces and transceivers are not used.

In the same manner, in the example of FIG. 2B, in the control portion 110 same as the control portion 110 in the example of FIG. 2A, the interface 3 (113) and the transceiver (123) compatible with RS485 that are communication interfaces used by the status monitor portion 3 (203), the interface 5 (115) compatible with Ethernet (Trademark) that is a communication interface used by the host system B 302, and the transceiver 5 (125) are actually used. In addition, the interface 6 (126) for outputting battery control signals for performing direct instruction of, e.g., relay control to the energy storage battery module 3 (403) is also used. In this manner, it is possible to be compatible with energy storage battery modules, status monitors, and host systems having different specifications and usages by the energy storage system controllers 100 including the same control portion 110.

Note that, regarding the communication interfaces and transceivers not used, for example, power supply is not carried out by stopping operation including stand-by, thereby reducing power. Here, discrimination of the communication interfaces actually used can be automatically carried out by, for example, detecting electric signals outputted from the status monitor portions and host systems when they are actually connected to the energy storage system controller 100 and operated, or externally set using setting means such as DIP switches and registers.

In the examples of FIGS. 2A and 2B, there is one type of the energy storage battery module and the status monitor potion connected to the energy storage controller 100, respectively, that is, there is one type of interface used in the communications with the status monitor portion (in the figures, SPI or RS485). On the other hand, for example, when the configuration is hybrid such that different types of energy storage battery modules are controlled at the same time like a lithium battery and a lead battery, it is possible to use different types of interfaces at the same time for performing communications in parallel with status monitor portions having different specifications from each other.

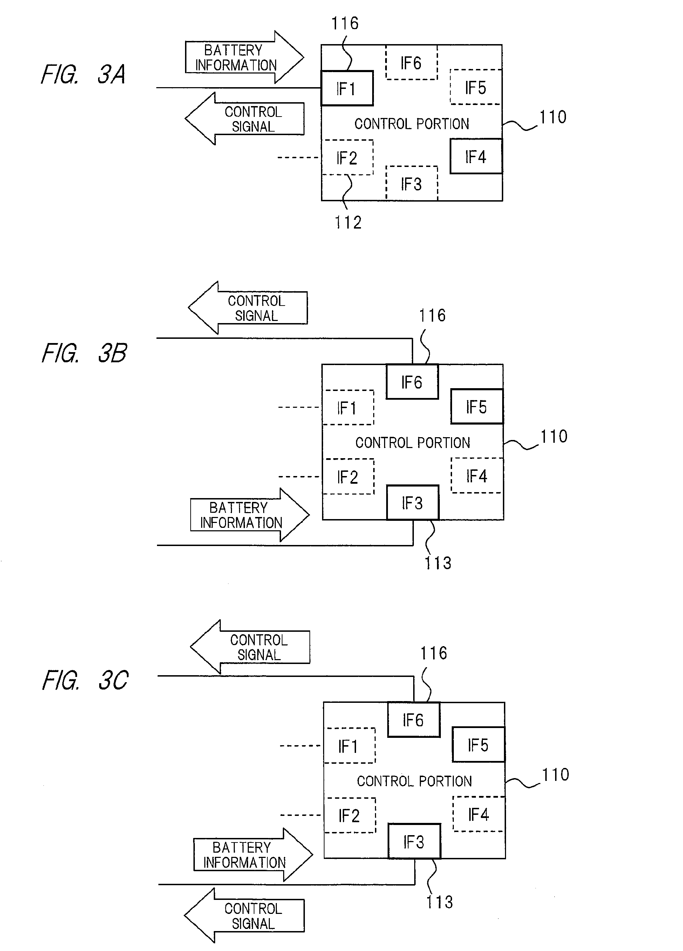

FIG. 3 is a diagram illustrating a schema about a configuration example of information transferred and received between the interfaces of the control portion 110 and status monitors. In the example of FIG. 3A, interfaces of the control portion 110 illustrated in the example of above-described FIG. 2A is illustrated, and here, a plurality of interfaces performing communications with the status monitors (in the figure, for example, IF1 (111), IF2 (112), etc.) are serial communication interfaces, respectively, and have a configuration in which all of battery information transmitted from the status monitors (for example, voltage, temperature, etc.) and control signals transmitted to the status monitors (for example, alert signals, stop instruction signals to the energy storage battery modules and cells) are included in serial communications.

In the example of FIG. 3B, interfaces of the control portion illustrated in the example of above-described FIG. 2B is illustrated, and here, separately from the plurality of interfaces for serial communications including only battery information transmitted from the status monitor portion (in the figure, for example, IF1 (111) to IF3 (113)), one interface for transmitting battery control signals for directly performing control on the energy storage battery modules and cells (in the figure, IF6 (116)) is included. The battery control signals are, for example, signals of "0" and "1" (externally transmitted signals) for relay control and the like.

In the example of FIG. 3C, although being similar to the example of FIG. 3B, the configuration of FIG. 3A is fused together with the example of FIG. 3B, so that one interface (in the figure, IF6 (116)) transmitting battery control signals for directly performing relay control etc. to the energy storage battery modules and cells is included separately from the interfaces (in the figure, for example, IF1 (111) to IF3 (113)) for serial communications including all of the battery information transmitted from the status monitor and the control signals transmitted to the status monitor portion. Accordingly, control systems for energy storage batteries are doubled and it enables an improvement in reliability.

As described above, according to the energy storage system controller which is an embodiment of the present invention, a plurality of types of communication interfaces, which may be necessary for communications with energy storage battery modules (and status monitor portions acquiring information of statuses of the energy storage battery modules) and/or host systems having a plurality of types of specifications and usages, are provided. Accordingly, it is possible to compatible with changes and so forth of specifications and usages of the energy storage battery modules and status monitor portions, host systems, etc. by the common control portion 110 and the energy storage system controller 100, thereby enabling reductions in development period and cost.

While the invention made by the inventors of the present invention has been concretely described based on the embodiments in the foregoing, it is needless to say that the present invention is not limited to the foregoing embodiments and various modifications and alterations can be made within the scope of the present invention. For example, the embodiment described above has been described in detail to make it easily understandable and thus it is not necessarily limited to an embodiment having all the configurations described above. Moreover, as to a part of the configurations of the embodiment described above, another configuration can be added, eliminated and/or replaced.

### INDUSTRIAL APPLICABILITY

The present invention is utilizable in controllers of energy storage systems formed of lithium ion batteries and lithium ion capacitors, etc.

### EXPLANATION OF REFERENCE SYMBOLS

100...Energy Storage Controller; 110...Control Portion; 111-116...Interfaces (IF) 1-6; 123-125...Transceivers 3-5; 201-3...Status monitor portions 1-3; 301...Host System A; 302...Host System B; 401, 3...Energy Storage Battery Modules 1, 3.

## Claims

1. An energy storage system controller connected to energy storage battery modules including a plurality of energy storage battery cells and status monitor portions acquitting battery information that is information related to statuses of the energy storage battery cell, the energy storage system controller comprising a control portion receiving the battery information from the storage monitor portion and outputting control signals for performing control of the energy battery cells based on the battery information,
wherein the control portion includes a plurality of types of first communication interfaces for transferring and receiving data to and from the status monitor portions, and
the control portion is capable of carrying out transmission and reception of the battery information and the control signals to and from a plurality of types of the status monitors or the energy storage battery cells corresponding to different ones of the first communication interfaces.

2. The energy storage system controller according to claim 1,
wherein, as the first communication interfaces, the control portion includes: communication interfaces carrying out at least one or more types of serial communications; and communication interfaces carrying out communications by at least one or more types of differential signals.

3. The energy storage system controller according to claim 2,
wherein, as the first communication interfaces, the control portion includes a plurality of communication interfaces carrying out serial communications including the battery information outputted from the status monitor portions and control signals outputted from the control portion.

4. The energy storage system controller according to claim 2,
wherein, as the first communication interfaces, the control portion includes: a plurality of communication interfaces carrying out serial communication including the battery information outputted from the status monitor portions; and a communication interface carrying out communications including battery control signals for directly performing control on the energy storage battery cells.

5. The energy storage system controller according to claim 2,
wherein, as the first communication interfaces, the control portion includes: a plurality of communication interfaces carrying out serial communications including the battery information outputted from the status monitor portions and control signals outputted from the control portion; and a communication interface carrying out communications including battery control signals for directly performing control on the energy storage battery cells.

6. The energy storage system controller according to claim 1, further connected to host systems which use the energy storage battery modules,
wherein the control portion includes one or more second communication interfaces for transferring and receiving data with the host systems, and is capable of transferring and receiving data with one or more types of the host systems corresponding to different ones of the second communication interfaces.

7. The energy storage system controller according to claim 1,
wherein the control portion is capable of transmitting and receiving the battery information and the control signals with a plurality of different types of the status monitor portions or the energy storage battery cells in parallel.
